# FASCICULE DE BREVET EUROPEEN

(11) **EP 1 769 489 B1**
(45) Date de publication et mention de la délivrance du brevet: **09.09.2009**
(21) Numéro de dépôt: 04767759.6
(22) Date de dépôt: 22.07.2004
(51) Int. Cl.: G10L 15/00

(54) **PROCEDE ET SYSTEME DE RECONNAISSANCE VOCALE ADAPTES AUX CARACTERISTIQUES DE LOCUTEURS NON-NATIFS**
SPRACHERKENNUNGSVERFAHREN UND -SYSTEM, DAS AN DIE EIGENSCHAFTEN VON NICHTMUTTERSPRACHLERN ANGEPASST IST
VOICE RECOGNITION METHOD AND SYSTEM ADAPTED TO NON-NATIVE SPEAKERS' CHARACTERISTICS

(43) Date de publication de la demande: 04.04.2007
(73) Titulaire: FRANCE TELECOM, 75015 Paris (FR)
(72) Inventeur: JOUVET, Denis, 22300 Lannion (FR); BARTKOVA, Katarina, 22300 Lannion (FR)
(74) Mandataire: Cabinet Plasseraud
(86) Numéro de dépôt international: PCT/FR2004/001958
(87) Numéro de publication internationale: WO 2006/021623

(56) Documents cités:
- EP-A- 1 418 570
- US-A- 5 865 626
- MATSUNAGA S ET AL: "Non-native english speech recognition using bilingual English lexicon and acoustic models" MULTIMEDIA AND EXPO, 2003. PROCEEDINGS. 2003 INTERNATIONAL CONFERENCE ON 6-9 JULY 2003, PISCATAWAY, NJ, USA,IEEE, vol. 3, 6 juillet 2003 (2003-07-06), pages 625-628, XP010651111 ISBN: 0-7803-7965-9
- FISCHER V ET AL: "Multilingual acoustic models for the recognition of non-native speech" AUTOMATIC SPEECH RECOGNITION AND UNDERSTANDING, 2001. ASRU '01. IEEE WORKSHOP ON 9-13 DEC. 2001, PISCATAWAY, NJ, USA,IEEE, 9 décembre 2001 (2001-12-09), pages 331-334, XP010603743 ISBN: 0-7803-7343-X

## Description

L'invention porte sur la reconnaissance de la parole dans un signal audio, par exemple un signal audio prononcé par un locuteur.

Plus particulièrement, l'invention concerne un procédé et un système automatique de reconnaissance vocale basés sur l'utilisation de modèles acoustiques des signaux vocaux, selon lesquels la parole est modélisée sous la forme d'une ou plusieurs successions de modèles d'unités vocales correspondant chacune à un ou plusieurs phonèmes.

Une application particulièrement intéressante d'un tel procédé et d'un tel système concerne la reconnaissance automatique de la parole pour la dictée vocale ou dans le cadre de services vocaux interactifs liés à la téléphonie.

Différents types de modélisation peuvent être utilisés dans le cadre de la reconnaissance de la parole. On pourra, à cet égard, se référer à l'article de Lawrence R. Rabiner intitulé « A tutorial on Hidden Markov Models and Selected Applications on Speech Recognition », proceedings of the I.E.E.E., vol. 77, n°2, février 1989. Cet article décrit l'utilisation de modèles de Markov cachés pour modéliser des signaux vocaux.

Selon une telle modélisation, une unité vocale, par exemple un phonème ou un mot, est représentée sous la forme d'une ou de plusieurs séquences d'états et d'un ensemble de densités de probabilité modélisant les formes spectrales qui résultent d'une analyse acoustique. Les densités de probabilité sont associées aux états ou aux transitions entre états. Cette modélisation est alors utilisée pour reconnaître un segment de parole énoncée par mise en correspondance avec des modèles disponibles associés à des unités connues (par exemple des phonèmes) par le système de reconnaissance vocale. L'ensemble des modèles disponibles est obtenu par apprentissage préalable, à l'aide d'un algorithme prédéterminé.

Autrement dit, grâce à un algorithme d'apprentissage, on détermine à partir d'échantillons identifiés, l'ensemble des paramètres caractérisant les modèles des unités vocales.

Par ailleurs, pour aboutir à de bonnes performances de reconnaissance, la modélisation des phonèmes tient généralement compte des influences contextuelles, par exemple les phonèmes qui précèdent et qui suivent le phonème courant.

Dans le cas d'un système de reconnaissance de parole, indépendant du locuteur, les modèles acoustiques des phonèmes (ou autres unités choisies) doivent être estimés à partir d'exemples de prononciation de mots ou de phrases provenant de plusieurs milliers de locuteurs. Ce large corpus de parole permet de disposer pour chaque unité (phonème ou autre) de nombreux exemples de prononciation de celle-ci par une grande variété de locuteurs, et donc permet l'estimation de paramètres qui caractérisent une large gamme de prononciations.

Typiquement pour le français, par exemple, on dispose d'environ 36 phonèmes et les modèles acoustiques de ces phonèmes sont généralement estimés à partir de plusieurs dizaines d'heures de signal de parole, correspondant à des prononciations de mots ou de phrases en français par des locuteurs français. La situation se transpose naturellement pour chaque langue traitée par un système de reconnaissance : le nombre, la nature des phonèmes ainsi que les corpus de parole sont spécifiques à chaque langue.

Pour l'estimation des modèles acoustiques des unités vocales, chaque mot ou phrase du corpus de parole est décrit en termes d'une ou plusieurs successions d'unités vocales représentant les différentes prononciations possibles de ce mot ou de cette phrase.

Par exemple, pour le mot « Paris » la prononciation en terme de phonèmes peut s'écrire :
Paris ⇔ ## . p . a . r . i . $$
où « ## » et « $$ » représentent les modèles de silence, éventuellement identiques, de début et fin d'énoncé, et où le «. » indique la succession d'unités, ici des phonèmes.

Plus précisément, la description du mot « Paris » utilisée pour l'estimation des modèles acoustiques, dans le cas d'une modélisation standard du français, qui est ici la langue dite « cible », s'écrit :
Paris ⇔ ## . p_fr_FR. a_fr_FR . r_fr_FR . i_fr_FR . $$
où « _fr » indique la langue cible traitée, ici le français, et « _FR » indique l'origine des données utilisées pour apprendre les paramètres des modèles, ici de France.

Dans le cas où plusieurs variantes de prononciation existent pour un énoncé, l'algorithme d'apprentissage détermine automatiquement la variante qui conduit au meilleur score d'alignement, c'est-à-dire celle qui correspond le mieux avec la prononciation de l'énoncé. L'algorithme ne conserve alors que les informations statistiques liées à cet alignement.

La procédure d'apprentissage est itérative. Les paramètres, qui sont estimés à chaque itération, résultent des statistiques cumulées sur l'ensemble des alignements des données d'apprentissage.

L'approche ainsi décrite conduit à de bonnes performances de reconnaissance dans des conditions d'utilisation non perturbées. En effet, les performances de reconnaissance sont d'autant meilleures que les conditions d'utilisation sont proches des conditions d'enregistrement des corpus de parole ayant servi à faire l'apprentissage des modèles.

En effet, comme mentionné précédemment, les systèmes de reconnaissance identifient les mots prononcés en comparant les mesures effectuées sur le signal de parole à des prototypes caractérisant les mots à reconnaître. Ces prototypes étant fabriqués à partir d'exemples de prononciation de mots et de phrases, il en résulte qu'ils sont représentatifs de la prononciation de ces mots dans les conditions d'acquisition du corpus : typologie des locuteurs, milieu et bruit ambiant, type de microphone employé ,réseau de transmission utilisé, .... En conséquence, toute modification significative de conditions entre l'acquisition du corpus et l'utilisation du système de reconnaissance engendre une chute de performance de reconnaissance.

Comme on le conçoit, le changement de typologie du locuteur entre l'acquisition et l'utilisation du système de reconnaissance engendre une telle modification de condition. Ce problème se pose de façon accrue en particulier pour la reconnaissance de paroles prononcées par des locuteurs ayant un accent étranger. En effet, un locuteur non-natif peut avoir des difficultés à prononcer des sons qui n'existent pas dans sa langue maternelle ou encore des sons peuvent se prononcer légèrement différemment dans chacune des deux langues, maternelle et étrangère.

Dans le cas d'un système de reconnaissance utilisé dans sa configuration standard, les modèles acoustiques sont typiquement appris à partir de données provenant exclusivement de locuteurs natifs de la langue traitée, et de ce fait ne représentent bien que la prononciation standard des phonèmes. De même, la description des mots en termes de phonèmes ne prend en compte que la ou les prononciations natives des mots.

En conséquence, comme il n'y a pas de variantes de prononciation ajoutées et que les modèles acoustiques ne représentent pas correctement les sons prononcés par des locuteurs non-natifs de la langue considérée, on observe une chute significative des performances de reconnaissance dès que le locuteur a un accent étranger marqué.

Dans l'article de K. Bartkova & D. Jouvet, " Language based phone model combination for ASR adaptation to foreign accent ", proceedings ICPHS '99, International Conférence on Phonetic Sciences, San Francisco, USA, 1er-7 août 1999, vol.3, pp. 1725- 1728, une variante a été proposée par rapport à la configuration standard d'un système de reconnaissance de la parole, c'est-à-dire utilisant uniquement des modèles de phonèmes prononcés par des locuteurs natifs. Cet article propose d'enrichir la description de la prononciation en ajoutant des variantes qui exploitent des modèles de phonèmes de la langue maternelle. Autrement dit, l'article propose d'ajouter des modèles de phonèmes dans la langue étrangère considérée, c'est-à-dire la langue du locuteur non-natif, afin d'enrichir la base de données de modèles.

Cependant, cette approche a pour inconvénient de devoir décider pour chaque mot à reconnaître quels modèles de phonèmes il est intéressant d'utiliser en complément de la ou les prononciations natives de ce mot.

En outre, le document « Non native English speech recognition using bilingual English lexicon and acoustic models » publié par S. Matsunaga, A. Ogawa, Y. Yamaguchi et A. Imanura - IEEE, Juillet 2003, décrit l'utilisation d'un lexique de prononciation bilingue dans lequel chaque mot à une prononciation en termes de phonèmes japonais. Il s'agit donc de différents phonèmes dans les langues différentes.

Le but de l'invention est de pallier les inconvénients précités et de fournir un procédé et un système de reconnaissance de la parole permettant la reconnaissance de mots ou de phrases prononcés par un locuteur non-natif.

L'invention a donc pour objet un procédé de reconnaissance d'un signal vocal selon la revendication 1, comprenant une étape d'élaboration par une procédure d'apprentissage itérative, de modèles acoustiques représentant un ensemble standard de modèles d'unités vocales énoncées dans une langue cible donnée et une étape d'utilisation des modèles acoustiques pour reconnaître le signal vocal par comparaison de ce signal avec les modèles acoustiques obtenus préalablement. Selon une caractéristique générale de ce procédé, au cours de l'élaboration des modèles acoustiques, on élabore en outre un ensemble supplémentaire de modèles d'unités vocales dans la langue cible adaptés aux caractéristiques d'au moins une langue étrangère.

Ce procédé a pour avantage d'adapter les modèles acoustiques à une ou plusieurs langues étrangères, et de réduire ainsi le taux d'erreur lors de la reconnaissance vocale, dû à la différence de prononciation des locuteurs non-natifs.

Selon une autre caractéristique de ce procédé, l'ensemble supplémentaire de modèles d'unités vocales de la langue cible adaptés aux caractéristiques d'au moins une langue étrangère est estimé à partir de prononciations de mots ou de phrase dans au moins une langue étrangère.

On élabore donc l'ensemble supplémentaire de modèles d'unités vocales à partir de phonèmes, de mots ou de phrases énoncés par un ou plusieurs locuteurs non-natifs de la langue cible.

Selon une autre caractéristique de l'invention, on reconnaît un signal vocal énoncé dans une langue cible et comprenant des phonèmes prononcés selon des caractéristiques d'une langue étrangère, en comparant chaque énoncé d'une part aux modèles des unités vocales de l'ensemble supplémentaire, et d'autre part aux modèles des unités vocales de l'ensemble standard.

Selon une autre caractéristique de l'invention, on reconnaît un signal vocal énoncé dans une langue cible et comprenant des phonèmes prononcés selon des caractéristiques d'une langue étrangère, en comparant le signal à reconnaître à une combinaison de modèles des unités vocales de l'ensemble standard et de modèles des unités vocales de l'ensemble supplémentaire.

Selon une autre caractéristique de l'invention, les modèles acoustiques comprennent en outre un ensemble de modèles des unités vocales énoncées dans au moins une langue étrangère.

Selon une autre caractéristique de l'invention, on reconnaît un signal vocal dans une langue cible et modifié selon des caractéristiques d'une langue étrangère, en le comparant à une combinaison de modèles d'unités vocales comprenant en outre un ensemble de modèles d'unités vocales énoncées dans un moins une langue étrangère.

On peut comparer un signal vocal soit aux modèles d'unités vocales, soit à des combinaisons de modèles d'unités vocales appartenant à l'ensemble de modèles standard, supplémentaire ou à un autre ensemble de modèles d'unités vocales dans au moins une langue étrangère.

L'invention a également pour objet un système de reconnaissance vocale selon la revendication 6, comprenant des moyens d'analyse de signaux vocaux pour élaborer, par une procédure d'apprentissage itérative, des modèles acoustiques représentant un ensemble standard des modèles d'unités vocales énoncées dans une langue cible donnée et des moyens de comparaison d'un signal vocal à reconnaître avec les modèles acoustiques d'unités vocales obtenus préalablement. Les modèles acoustiques comprennent en outre un ensemble supplémentaire de modèles d'unités vocales dans la langue cible adaptés aux caractéristiques d'au moins une langue étrangère.

D'autres buts, caractéristiques et avantages de l'invention apparaîtront à la lecture de la description suivante, donnée uniquement à titre d'exemple non-limitatif, et faite en référence aux dessins annexés sur lesquels :
- la figure 1 est un schéma synoptique illustrant la structure générale d'un système de reconnaissance vocale selon l'invention ;
- la figure 2 est une représentation schématique de la décomposition d'un mot en phonèmes ;
- la figure 3 est un schéma synoptique illustrant le procédé de reconnaissance vocale selon l'invention ;
- la figure 4 illustre une variante du procédé de reconnaissance vocale selon l'invention ;
- les figures 5 et 6 représentent une variante du procédé de reconnaissance vocale selon l'invention.

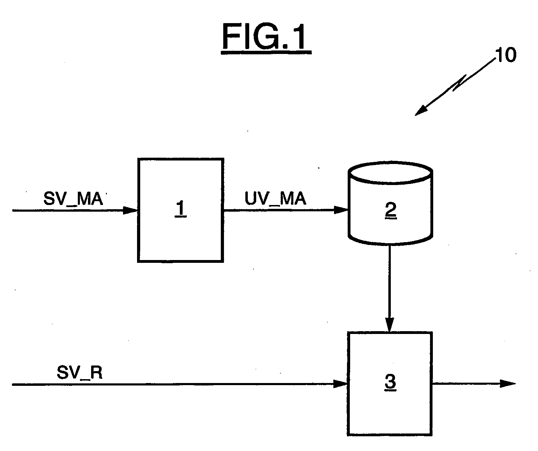

Sur la figure 1, on a représenté de manière très schématique la structure générale d'un système de reconnaissance vocale, conforme à l'invention, désigné par la référence numérique générale 10.

Comme on le voit, ce système reçoit en entrée des signaux vocaux SV_MA servant à l'élaboration de modèles acoustiques et des signaux vocaux SV_R à reconnaître, en utilisant les modèles acoustiques.

Le système 10 comprend des moyens 1 d'analyse des signaux vocaux SV_MA, destinés à élaborer des modèles acoustiques utilisés pour la reconnaissance. Les moyens 1 d'analyse déterminent à partir de l'ensemble des signaux vocaux SV_MA d'un corpus de parole des modèles d'unités vocales UV_MA, par exemple des phonèmes, pour former l'ensemble des modèles acoustiques 2 pour la reconnaissance vocale.

Pour la reconnaissance vocale proprement dite, des moyens de comparaison 3, connectés à l'ensemble des modèles acoustiques 2, reçoivent en entrée le signal vocal à reconnaître SV_R. Les moyens de comparaison 3 réalisent une comparaison entre le signal vocal à reconnaître SV_R et les modèles acoustiques 2 préalablement élaborés par les moyens 1 d'analyse. Ils permettent ainsi de reconnaître le signal vocal SV_R à partir des modèles acoustiques 2 des unités vocales UV_MA.

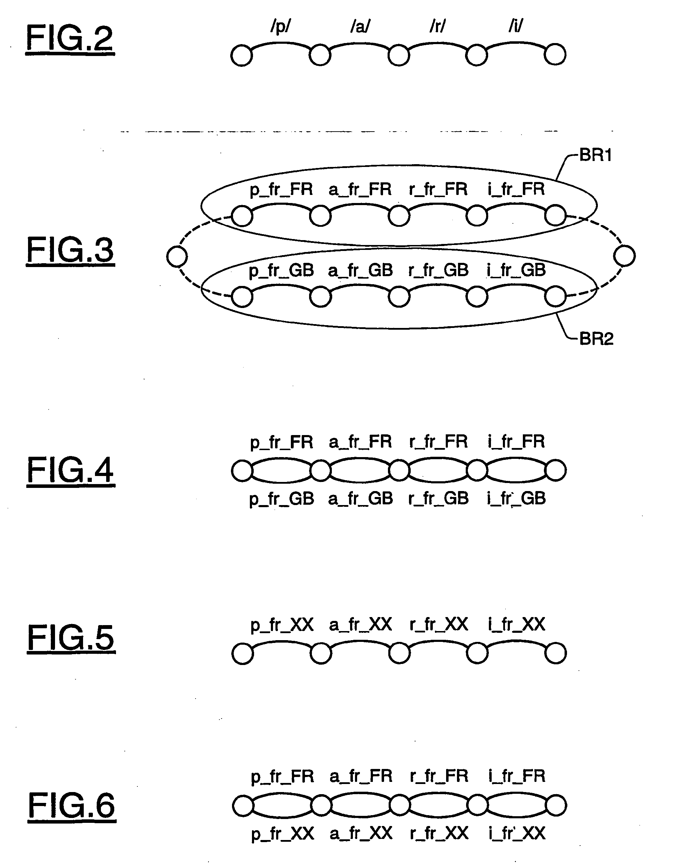

On se réfère à présent à la figure 2, sur laquelle on a représenté, sur cet exemple et de manière schématique la décomposition en phonèmes d'un mot, « Paris ». Le mot « Paris » se décompose en quatre phonèmes, tel que décrit précédemment. La décomposition en unités vocales, ici en phonèmes, est à la base de l'étape d'élaboration d'un ensemble de modèles acoustiques, ainsi qu'à la base de l'étape de reconnaissance proprement dite, d'une donnée vocale.

Lors de l'étape d'élaboration des modèles acoustiques d'unités vocales adaptés aux caractéristiques d'au moins une langue étrangère, on établit une correspondance entre les phonèmes des deux langues, c'est-à-dire entre chaque langue étrangère considérée et la langue cible. Ainsi, l'adaptation des modèles acoustiques de la langue cible se fait à partir des données de parole caractéristiques de la langue étrangère.

Dans l'exemple suivant, on effectue les correspondances entre des phonèmes anglais, qui est -dans cet exemple la langue étrangère considérée, et leur équivalent français.

Par exemple, en notant a_gb le phonème « a » exprimé en langue anglaise et a_fr le phonème « a » exprimé en langue française, la correspondance peut s'exprimer de manière simple, par a_gb ⇔ a_fr. Mais elle peut également s'effectuer de façon plus complexe. Par exemple, en ce qui concerne un phonème « dge », cette correspondance pourra s'exprimer par : dge_gb ⇔ d_fr. ge_fr.

Ainsi la décomposition en unités vocales de la prononciation anglaise des mots « Paris » et « message » :

| |
|---|
| Paris_ gb ⇔ ## . p_gb . a_gb . r_gb . i_gb . s_gb . $$ |
| message_gb ⇔ ## . m_gb . e_gb . s_gb . I_gb . dge_gb . $$ |

sera transformée, par application des correspondances, en une décomposition en unités vocales de la langue cible :

| |
|---|
| Paris_ fr_GB ⇔ ## . p_fr_GB . a_fr_GB . r_fr_GB . i_fr_GB . |
| s_fr_GB .$$ |
| message_fr_GB ⇔ ## . m_ fr_GB . e_fr_GB . s_ fr_GB . i_ fr_GB . |
| d_fr_GB . ge_fr_GB . $$ |

Le premier suffixe _fr indique la langue cible des phonèmes considérés, ici le français. Le deuxième suffixe _GB, indique la langue étrangère parlée par le locuteur.

En traitant ainsi toutes les données énoncées dans la langue étrangère, et en appliquant une procédure standard d'apprentissage ou d'adaptation, on aboutit alors à un jeu de modèles acoustiques supplémentaires des unités vocales de la langue cible, ici la langue française, adapté à la parole de la langue du locuteur non-natif, prononcée par le locuteur non-natif.

Par ailleurs, pour ne pas biaiser l'estimation des paramètres, on peut choisir de considérer_que quelques phonèmes n'ont pas de correspondance, auquel cas les phrases ou mots correspondant seront ignorés lors de la phase d'élaboration des modèles acoustiques des unités vocales adaptés aux caractéristiques d'une langue étrangère.

On se réfère à présent à la figure 3, qui illustre un procédé de reconnaissance vocale selon l'invention. Ce procédé tient compte de l'ensemble supplémentaire de modèles de phonèmes que sont les modèles acoustiques des phonèmes du français adaptés aux caractéristiques d'une prononciation par un locuteur non-natif et dont l'élaboration a été décrite ci-dessus.

Le procédé de reconnaissance vocale selon l'invention doit alors tenir compte de deux jeux de modèles d'unités vocales. Ainsi, pour le mot « Paris » on a alors la décomposition suivante :

| |
|---|
| p_fr_FR . a__fr_FR . r_fr_FR . i_fr_FR |
| \| |
| p_fr_GB .a_fr_GB . r_fr_GB . i_fr_GB |

où le symbole « | » désigne un choix entre les deux formes de modélisation de la prononciation.

La première forme de modélisation de la prononciation regroupe les modèles acoustiques correspondant aux phonèmes du français prononcés par un locuteur français, le français étant la langue cible dans cet exemple. Ces modèles de phonèmes correspondent donc à l'ensemble standard des modèles acoustiques des phonèmes.

La deuxième forme de modélisation de la prononciation regroupe les modèles acoustiques correspondant aux phonèmes du français énoncés par un locuteur non-natif, un anglais dans cet exemple. Ces modèles de phonèmes correspondent donc à l'ensemble supplémentaire des modèles acoustiques des phonèmes.

Ainsi, tel que schématisé sur la figure 3, lors de la reconnaissance vocale d'un mot à partir des modèles acoustiques élaborés, la comparaison du signal vocal à reconnaître s'effectue avec des modèles acoustiques appartenant d'une part à l'ensemble standard des modèles des phonèmes regroupés dans la branche BR1, et d'autre part à l'ensemble supplémentaire des modèles des phonèmes de la langue cible, ici l'anglais dans la branche BR2.

Une fois la comparaison effectuée avec l'une et l'autre des deux branches BR1 ou BR2, on conserve à la fin le résultat associé à la branche donnant le meilleur score d'alignement.

On se réfère à présent à la figure 4, qui représente une variante du procédé de reconnaissance vocale selon l'invention. La variante, utilise également des modèles de phonèmes appartenant à l'ensemble standard des modèles de phonèmes, et à l'ensemble supplémentaire des modèles de phonèmes. Cependant, cette variante autorise lors de la comparaison avec le signal vocal à reconnaître, à alterner, si l'algorithme de comparaison le juge pertinent, entre les modèles de phonèmes de l'ensemble standard et les modèles de l'ensemble supplémentaire des modèles de phonèmes.

Une telle variante, offre une grande souplesse lors de la reconnaissance vocale. Elle permet ainsi la reconnaissance d'un mot où, par exemple, seul un phonème a été prononcé avec un accent étranger. Une autre application est la prononciation d'un mot d'origine étrangère, par exemple un nom propre, dans une phrase énoncée dans la langue cible, par exemple en français. Ce mot peut alors être prononcé à la française, faisant appel aux modèles de phonèmes de l'ensemble standard, ou avec l'accent étranger, faisant alors appel aux modèles de phonèmes de l'ensemble supplémentaire.

En outre, le grain du parallélisme peut être plus ou moins fin, allant du phonème à la phrase par exemple. Ainsi, on peut comparer un signal vocal soit aux modèles d'unités vocales, soit à des combinaisons de modèles d'unités vocales.

Par ailleurs, on peut élaborer des modèles acoustiques adaptés non pas aux caractéristiques d'une seule langue étrangère, mais aux caractéristiques de plusieurs langues étrangères. Ainsi, le mot « Paris » se décomposerait de cette façon :
Paris_fr_XX ⇔ p_fr_XX . a_fr_XX . r_fr_XX . i_fr_XX

Le symbole _XX correspond alors à un ensemble de langues étrangères. L'élaboration des modèles acoustiques des unités vocales se fait alors à partir d'un ensemble étendu de données multilingues. Les modèles acoustiques obtenus correspondent alors à des prononciations de ces sons par une large gamme de locuteurs étrangers. Le corpus d'apprentissage peut également contenir un complément de données de parole prononcées par des locuteurs natifs, c'est-à-dire des données typiquement utilisées pour l'apprentissage des modèles acoustiques de l'ensemble standard.

Les modèles de phonèmes adaptés à partir de données de plusieurs langues étrangères peuvent s'utiliser exclusivement, tel que représenté sur la figure 5. On reconnaît alors un mot par comparaison du signal vocal à reconnaître avec les modèles acoustiques de l'ensemble supplémentaire.

La variante représentée sur la figure 6, autorise lors de la comparaison avec le signal vocal à reconnaître à alterner, si l'algorithme de comparaison le juge pertinent, entre les modèles de phonèmes de l'ensemble standard et les modèles de phonèmes de l'ensemble supplémentaire.

En outre, selon une autre variante de l'invention, on peut encore enrichir l'ensemble des modèles acoustiques en ajoutant à l'ensemble standard des modèles de phonèmes de la langue cible et à l'ensemble supplémentaire des modèles de phonèmes, un autre ensemble de modèles de phonèmes correspondant à la langue étrangère du locuteur considéré. Ainsi, lors de la reconnaissance vocale d'un mot, on peut comparer chaque énoncé à des combinaisons de modèles provenant de trois ensembles distincts de modèles acoustiques : l'ensemble standard de la langue cible, l'ensemble supplémentaire de la langue cible adapté pour un locuteur non-natif, et un ensemble de modèles de phonèmes dans la langue étrangère.

Aussi, en enrichissant l'ensemble des modèles acoustiques avec un ensemble supplémentaire adapté aux caractéristiques d'au moins une langue étrangère, on diminue de façon significative le taux d'erreur de reconnaissance.

## Revendications

1. Procédé de reconnaissance d'un signal vocal, comprenant une étape d'élaboration par une procédure d'apprentissage itérative, de modèles acoustiques représentant un ensemble standard de modèles d'unités vocales énoncées dans une langue cible donnée et une étape d'utilisation des modèles acoustiques pour reconnaître le signal vocal par comparaison de ce signal avec les modèles acoustiques obtenus préalablement, **caractérisé en ce qu'**au cours de l'élaboration des modèles acoustiques, on élabore en outre un ensemble supplémentaire de modèles d'unités vocales dans la langue cible, adaptés aux caractéristiques d'au moins une langue étrangère, l'ensemble supplémentaire de modèles d'unités vocales de la langue cible adaptés aux caractéristiques d'au moins une langue étrangère étant estimé à partir de prononciations de mots ou de phrases dans au moins une langue étrangère, et **en ce que** l'on reconnaît un signal vocal énoncé dans une langue cible et comprenant des phonèmes prononcés selon des caractéristiques d'une langue étrangère, en comparant chaque énoncé d'une part aux modèles des unités vocales de l'ensemble supplémentaire (BR2), et/ou, d'autre part, aux modèles des unités vocales de l'ensemble standard (BR1).

2. Procédé selon la revendication 1, **caractérisé par le fait que** l'on reconnaît un signal vocal énoncé dans une langue cible et comprenant des phonèmes prononcés selon des caractéristiques d'une langue étrangère, en comparant le signal à reconnaître à une combinaison de modèles des unités vocales de l'ensemble standard et de modèles des unités vocales de l'ensemble supplémentaire.

3. Procédé selon la revendication 1 ou 2, **caractérisé par le fait que** les modèles acoustiques comprennent en outre un ensemble de modèles d'unités vocales énoncées dans au moins une langue étrangère.

4. Procédé selon la revendication 3, **caractérisé par le fait que** l'on reconnaît un signal vocal énoncé dans une langue cible et modifié selon des caractéristiques d'une langue étrangère, en le comparant à une combinaison de modèles d'unités vocales comprenant en outre un ensemble de modèles d'unités vocales énoncées dans au moins une langue étrangère.

5. Procédé selon l'une quelconque revendications 1 à 4, **caractérisé par le fait que** l'on compare un signal vocal soit aux modèles d'unités vocales, soit à des combinaisons de modèles d'unités vocales appartenant à l'ensemble de modèles standard, supplémentaire ou à un autre ensemble de modèles d'unités vocales dans au moins une langue étrangère.

6. Système de reconnaissance vocale (10), comprenant des moyens d'analyse (1) de signaux vocaux (SV_MA) pour élaborer, par une procédure d'apprentissage itérative, des modèles acoustiques (2) représentant un ensemble standard de modèles d'unités vocales (UV_MA) énoncées dans une langue cible donnée et des moyens de comparaison (3) d'un signal vocal à reconnaître avec les modèles acoustiques (2) d'unités vocales obtenus préalablement, **caractérisé en ce que** les moyens d'analyse (1) sont adaptés pour élaborer en outre un ensemble supplémentaire de modèles d'unités vocales dans la langue cible, adaptés aux caractéristiques d'au moins une langue étrangère, l'ensemble supplémentaire de modèles d'unités vocales de la langue cible adaptés aux caractéristiques d'au moins une langue étrangère étant estimé à partir de prononciations de mots ou de phrases dans au moins une langue étrangère, et **en ce que** les moyens de comparaison (3) sont adaptés pour reconnaître un signal vocal énoncé dans une langue cible et comprenant des phonèmes prononcés selon des caractéristiques d'une langue étrangère, en comparant chaque énoncé d'une part aux modèles des unités vocales de l'ensemble supplémentaire (BR2), et/ou, d'autre part, aux modèles des unités vocales de l'ensemble standard (BR1).

## Claims

1. Method for recognizing a voice signal, comprising a step of developing, via an iterative learning procedure, acoustic models representing a standard set of models of voice units expressed in a given target language and a step of using acoustic models for recognizing the voice signal by comparing this signal with the acoustic models obtained before, **characterized in that** during the development of the acoustic models, an additional set of models of voice units is also developed in the target language, these models being suited to the characteristics of at least one foreign language, the additional set of voice unit models of the target language suited to the characteristics of at least one foreign language being estimated based on pronunciations of words or phrases in at least one foreign language, and **in that** a voice signal expressed in a target language and comprising phonemes pronounced according to characteristics of a foreign language is recognized, by comparing each utterance on the one hand with the models of the voice units of the additional set (BR2), and/or, on the other hand, with the models of the voice units of the standard set (BR1).

2. Method according to Claim 1, **characterized in that** a voice signal expressed in a target language and comprising phonemes pronounced according to characteristics of a foreign language are recognized, by comparing the signal to be recognized with a combination of models of the voice units of the standard set and of models of the voice units of the additional set.

3. Method according to Claim 1 or 2, **characterized in that** the acoustic models also comprise a set of voice unit models expressed in at least one foreign language.

4. Method according to Claim 3, **characterized in that** a voice signal expressed in a target language and modified according to the characteristics of a foreign language is recognized by comparing it with a combination of voice unit models also comprising a set of voice unit models expressed in at least one foreign language.

5. Method according to any one of Claims 1 to 4, **characterized in that** a voice signal is compared either with the voice unit models, or with combinations of voice unit models belonging to the set of models that is standard, additional or to another set of voice unit models in at least one foreign language.

6. Voice recognition system (10), comprising means (1) for analysing voice signals (SV_MA) in order to develop, via an iterative learning procedure, acoustic models (2) representing a standard set of voice unit models (UV_MA) expressed in a given target language and means (3) for comparing a voice signal to be recognized with the acoustic models (2) of voice units obtained before, **characterized in that** the analysis means (1) are suitable for also developing an additional set of voice unit models in the target language, models that are suited to the characteristics of at least one foreign language, the additional set of voice unit models of the target language suited to the characteristics of at least one foreign language being estimated based on pronunciations of words or phrases in at least one foreign language, and **in that** the comparison means (3) are suitable for recognizing a voice signal expressed in a target language and comprising phonemes pronounced according to the characteristics of a foreign language, by comparing each utterance on the one hand with models of the voice units of the additional set (BR2), and/or, on the other hand, with the models of the voice units of the standard set (BR1).

## Patentansprüche

1. Verfahren zur Erkennung eines Sprachsignals, das einen Schritt der Ausarbeitung, durch eine iterative Lernprozedur, von akustischen Modellen, die eine Standardgruppe von Modellen von in einer gegebenen Zielsprache geäußerten Spracheinheiten darstellen, und einen Schritt der Verwendung der akustischen Modelle enthält, um das Sprachsignal durch Vergleich dieses Signals mit den vorher erhaltenen akustischen Modellen zu erkennen, **dadurch gekennzeichnet, dass** während der Ausarbeitung der akustischen Modelle außerdem eine zusätzliche Gruppe von Modellen von Spracheinheiten in der Zielsprache ausgearbeitet wird, die an die Merkmale mindestens einer Fremdsprache angepasst sind, wobei die zusätzliche Gruppe von an die Merkmale mindestens eine Fremdsprache angepassten Modellen von Spracheinheiten der Zielsprache ausgehend von Aussprachen von Wörtern oder Sätzen in mindestens einer Fremdsprache geschätzt wird, und dass ein in einer Zielsprache geäußertes und gemäß Merkmalen einer Fremdsprache ausgesprochene Phoneme enthaltendes Sprachsignal erkannt wird, indem jede Äußerung einerseits mit den Modellen der Spracheinheiten der zusätzlichen Gruppe (BR2) und/oder andererseits mit den Modellen der Spracheinheiten des Standardgruppe (BR1) verglichen wird.

2. Verfahren nach Anspruch 1, **dadurch gekennzeichnet, dass** ein in einer Zielsprache geäußertes Sprachsignal, das gemäß Merkmalen einer Fremdsprache ausgesprochene Phoneme enthält, erkannt wird, indem das zu erkennende Signal mit einer Kombination von Modellen der Spracheinheiten der Standardgruppe und von Modellen der Spracheinheiten der zusätzlichen Gruppe verglichen wird.

3. Verfahren nach Anspruch 1 oder 2, **dadurch gekennzeichnet, dass** die akustischen Modelle außerdem eine Gruppe von Modellen von in mindestens einer Fremdsprache geäußerten Spracheinheiten enthalten.

4. Verfahren nach Anspruch 3, **dadurch gekennzeichnet, dass** ein in einer Zielsprache geäußertes und gemäß Merkmalen einer Fremdsprache verändertes Sprachsignal erkannt wird, indem es mit einer Kombination von Modellen von Spracheinheiten verglichen wird, die außerdem eine Gruppe von Modellen von in mindestens einer Fremdsprache geäußerten Spracheinheiten enthalten.

5. Verfahren nach einem der Ansprüche 1 bis 4, **dadurch gekennzeichnet, dass** ein Sprachsignal entweder mit den Modellen von Spracheinheiten oder mit Kombinationen von Modellen von Spracheinheiten verglichen wird, die zu der Standardgruppe von Modellen, zur zusätzlichen Gruppe von Modellen oder zu einer anderen Gruppe von Modellen von Spracheinheiten in mindestens einer Fremdsprache gehören.

6. Spracherkennungssystem (10), das Einrichtungen (1) zur Analyse von Sprachsignalen (SV_MA), um durch eine iterative Lernprozedur akustische Modelle (2) auszuarbeiten, die eine Standardgruppe von Modellen von in einer gegebenen Zielsprache geäußerten Spracheinheiten (UV_MA) darstellen, und Einrichtungen (3) zum Vergleich eines zu erkennenden Sprachsignals mit den vorher erhaltenen akustischen Modellen (2) von Spracheinheiten enthält, **dadurch gekennzeichnet, dass** die Analyseeinrichtungen (1) geeignet sind, um außerdem eine zusätzliche Gruppe von Modellen von Spracheinheiten in der Zielsprache auszuarbeiten, die an die Merkmale mindestens einer Fremdsprache angepasst sind, wobei die zusätzliche Gruppe von Modellen von an die Merkmale mindestens einer Fremdsprache angepassten Spracheinheiten der Zielsprache ausgehend von Aussprachen von Wörtern oder Sätzen in mindestens einer Fremdsprache geschätzt wird, und dass die Vergleichseinrichtungen (3) geeignet sind, um ein in einer Zielsprache geäußertes und gemäß den Merkmalen einer Fremdsprache ausgesprochene Phoneme enthaltendes Sprachsignal zu erkennen, indem jede Äußerung einerseits mit den Modellen der Spracheinheiten der zusätzlichen Gruppe (BR2) und/oder andererseits mit den Modellen der Spracheinheiten der Standardgruppe (BR1) verglichen wird.
